# EUROPÄISCHE PATENTANMELDUNG

(11) **EP 1 223 658 A1**
(43) Veröffentlichungstag der Anmeldung: **17.07.2002**
(21) Anmeldenummer: 01100732.5
(22) Anmeldetag: 12.01.2001
(51) Int. Cl.: H02K 1/27

(54) **Dauermagneterregter Rotor mit geminderten Leckfluss**

(71) Anmelder: SIEMENS AKTIENGESELLSCHAFT, 80333 München (DE)
(72) Erfinder: Die Erfindernennung liegt noch nicht vor

(57) **Zusammenfassung**

Bei einer bürstenlosen Synchronmaschine mit Erregung durch rotorseitige Magnete (M1-M8), die zwischen aus Lamellen-Segmenten (S1-S8) geschichteten, durch radiale Haltestege (H1-H8) gegenüber der Rotorwelle (RW) fixierbaren Polzähnen (P1-P8) speichenartig verteilt sind, ist zur Minderung eines Leckflusses über die Haltestege bei gleichzeitig hoher mechanischer Festigkeit vorgesehen, nur jedes zweite Lamellen-Segment (S1;S3;S5;S7) über einen Haltesteg (H1;H3;H5;H7) an die Rotorwelle (RW) anzubinden und die übrigen Lamellen-Segmente (S2;S4;S6;S8) derart mit Versatz zu schichten, dass sie axial stirnseitig an die Lamellen-Segmente mit Haltestegen, vorzugsweise durch eine Stanzpaketier-Verknüpfung, anbindbar sind.

## Beschreibung

Die Erfindung bezieht sich auf eine elektrische Maschine, insbesondere bürstenlose Synchronmaschine gemäß Patentanspruch 1; eine derartige elektrische Maschine ist insbesondere zum Einsatz als Kraftfahrzeug-Servoantrieb, vorzugsweise für Kühlerventilatoren und/oder hydraulische Pumpenantriebe, vorgesehen.

Eine elektrische Maschine mit dem ersten Teilmerkmal des Patentanspruchs 1 ist aus der DE 41 39 843 C1 bekannt. Zur Erhöhung des über den Luftspalt in den Stator eintretenden Nutzflusses und dementsprechend zur Minderung eines Leckflusses über Haltestege, welche die Wurzeln der Polzähne mit der Rotorwelle mechanisch verbinden, sind die Haltestege zur Erzielung eines hinreichenden Isthmus so schmal wie möglich gehalten; diese Erfordernis steht im Widerspruch zu einer hohen mechanischen Festigkeit, die insbesondere bei Antrieben hoher Drehzahl und zusätzlicher Unwuchtbelastung gefordert wird.

Gemäß Aufgabe vorliegender Erfindung soll ausgehend von einer elektrischen Maschine der eingangs genannten Art bei für ein Massenprodukt vorteilhafter Fertigungstechnik ein Antrieb geschaffen werden, der sich durch einen hohen Nutzflussanteil auszeichnet und läuferinterne Rückschlussverluste auch bei hoher mechanischer Festigkeit mittels stabiler Haltesteg-Verbindungen zwischen den radial äußeren Polzähnen und der radial inneren Rotorwelle minimiert.

Die Lösung dieser Aufgabe gelingt durch die Lehre des Anspruchs 1; vorteilhafte Ausgestaltungen der Erfindung sind jeweils Gegenstand der Unteransprüche.

Durch den Verzicht auf einen Teil der Haltestege kann der Streufluss-Leckpfad zwischen den Polwurzeln der Polzähne und der Rotorwelle wesentlich gemindert werden; die nicht allein hinsichtlich eines maximalen Isthmus sondern hinsichtlich einer optimalen mechanischen Fertigung und Festigkeit dimensionierbaren verbleibenden Haltestege übernehmen durch die vorteilhafte erfindungsgemäße Anbindung der Lamellen-Segmente erster Art an die axial davor bzw. dahinter liegenden Lamellen-Segmente zweiter Art die mechanische Fixierung des gesamten Rotorblechpaket-Verbandes einschließlich der von diesem zusätzlich gehalterten Magnete.

Die Herstellung eines solchen Rotorblechpaket-Verbandes wird insbesondere durch die Maßnahmen gemäß den Ansprüchen 5 bis 7 erleichtert, wobei nach einer weiteren vorteilhaften Ausgestaltung der Erfindung die Ausstanzung und der Zusammenhalt der axial stirnseitig gegeneinander angebundenen Lamellen-Segmente erster und zweiter Art gemäß dem an sich bekannten Stanz-Paketier-Verfahren in einem Arbeitsgang erfolgen kann.

Die Erfindung sowie vorteilhafte Ausgestaltungen dieser Erfindung gemäß Merkmalen der Unteransprüche werden im folgenden anhand schematisch dargestellter Ausführungsbeispiele in der Zeichnung näher erläutert; darin zeigen:
- FIG 1: die stirnseitige Draufsicht auf ein von einer Rotorwelle aufgenommenes, mit Magneten bestücktes Rotorblechpaket;
- FIG 2,3: die Anordnung gemäß FIG 1 im Schnittverlauf II bzw. III;
- FIG 4: eine Anordnung gemäß FIG 1, jedoch mit im Sinne einer Schichtungs- und/oder Paketierungshilfe abgeänderten stirnseitigen Endlamellen des Rotorblechpaketes;
- FIG 5,6: die Anordnung gemäß FIG 4 im Schnittverlauf V bzw. VI;
- FIG 7,8: in perspektivischer Darstellung die Rotorblechpakete gemäß FIG 1 bzw. FIG 4.

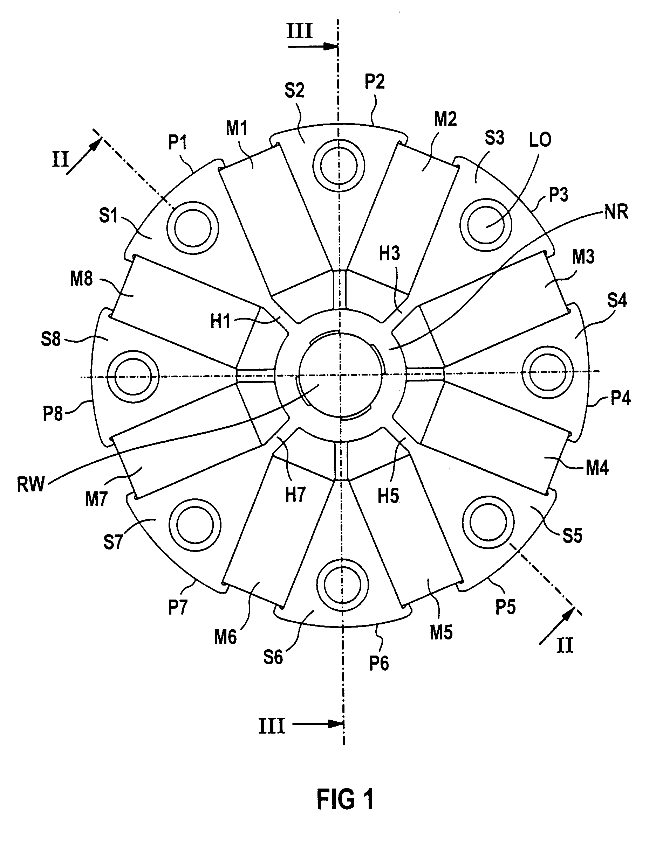

FIG 1 zeigt die stirnseitige Draufsicht auf eine Lamellen-Ebene L1 eines kompletten Rotorblechpaketes eines durch Magnete M1-M8 erregten Rotors einer elektrischen Maschine, deren zugehöriger Stator-Aufbau nach z.B. grundsätzlich aus der eingangs genannten DE 41 39 843 C1 bekannter Art erfolgen kann.

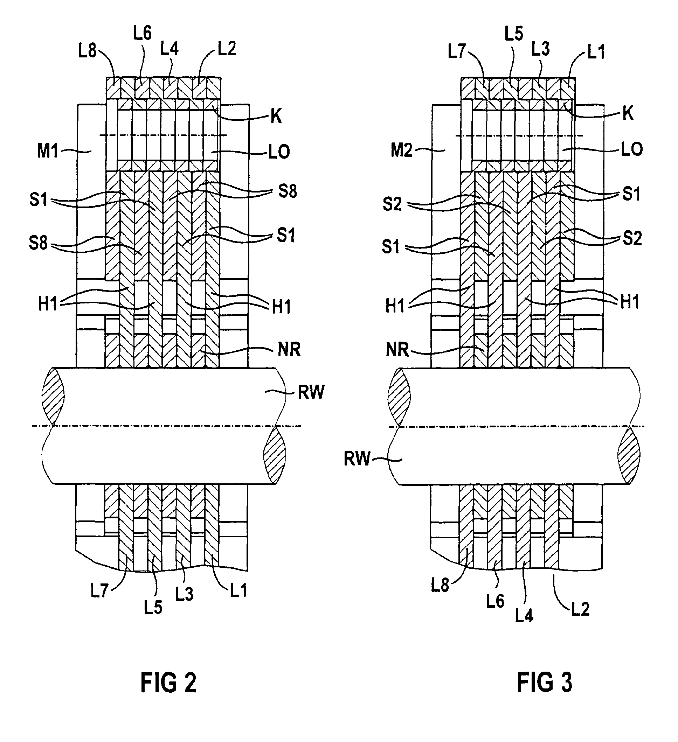

Die vorteilhaft quaderförmigen tangential magnetisierten Dauermagnete M1-M8 sind jeweils speichenartig tangential zwischen sich axial erstreckenden einzelnen Polzähnen P1-P8 gehaltert, die aus Lamellen-Segmenten S1-S8 in axial hintereinanderliegenden, aus FIG 2,3 ersichtlichen Lamellen-Ebenen L1-L8 geschichtet sind.

Das komplette Rotorblechpaket mit den Magneten M1-M8 ist gegenüber der Rotorwelle RW des Rotors ausgerichtet und fixiert.

Je Lamellen-Ebene L1-L5 sind acht Lamellen-Segmente S1-S8 vorgesehen, von denen abwechselnd Lamellen-Segmente erster Art S2;S4;S6;S8 im wesentlichen der eigentlichen, durch eine Nutzflussführung der Magnete M1-M8 bestimmten Flächenkontur entsprechen und Lamellen-Segmente zweiter Art S1;S3;S5;S7 - in aus der DE 41 39 843 C1 grundsätzlich bekannter Art - zusätzlich von der Polzahnwurzel der Polzähne ausgehende und zur Rotorwelle RW führende Haltestege H1;H3;H5;H7 aufweisen; die Haltestege münden rotorwellenseitig in einen Nabenring NR, in den die Rotorwelle RW einsteckbar bzw. einpressbar ist. Die Lamellen-Segmente erster Art S2;S4;S6;S8 bzw. die Lamellen-Segmente zweiter Art S1;S3;S5;S7 wechseln - wie aus FIG 1 ersichtlich - in Umfangsrichtung je Lamellenebene und in axialer Schichtung eines Polzahnes - wie aus FIG 2,3 ersichtlich - einander ab, derart dass - in axialer Schichtrichtung gesehen - jeweils ein Polzahn erster Art S2;S4;S6;S8 stirnseitig an einen axial vorliegenden und/oder nachliegenden Polzahn zweiter Art S1;S3;S5;S7 mit Haltesteg-Fixierung zur Rotorwelle RW anbindbar ist und somit in einen fixierten Paketverband auch ohne eigene Haltesteg-Fixierung einbindbar ist.

Durch die - beim gezeigten Ausführungsbeispiel - bei jedem zweiten Lamellen-Segment fehlende Haltesteg-Verbindung zur Rotorwelle wird die Möglichkeit eines unerwünschten nutzfeldmindernden Leckflusses stark behindert, ohne dass dazu die verbleibenden Haltestege in festigkeitsgefährdender und fertigungsbehindernder Weise übermäßig verschmälert werden müssen.

Die stirnseitige Anbindung der Lamellen-Segmente erster Art S2;S4;S6;S8 ohne Haltesteg an die Lamellen-Segmente zweiter Art S1;S3;S5;S7 mit Haltesteg erfolgt nach einem besonders vorteilhaften Ausführungsbeispiel durch eine an sich bekannte Stanzpaketier-Verknüpfung; dazu dienen Paketier-Verknüpfungsanformungen K, die randseitig an Lochaustanzungen LO angeformt sind; die Lochausstanzungen LO können vorteilhaft als Paketierungshilfe zum Aufstecken der Lamellen-Segmente auf einen Fädelstift oder zum Paketverbund mittels durchgesteckter und axial endseitig festziehbarer Schrauben oder dergleichen dienen.

In besonders fertigungs- und montagetechnisch vorteilhafter Weise sind je Lamellenebene zumindest die Lamellen-Segmente zweiter Art mit den angeformten Haltestegen und gegebenenfalls dem Nabenring sowie der Paketier-Verknüpfungsanformungen Teile eines einstückigen Stanzbiegeteils; zur weiteren Vereinfachung und gleichzeitigen Minimierung des Stanzabfalls sind die Lamellen-Segmenten erster Art ohne Haltesteg im gleichen Arbeitsgang und zwischen den Lamellen-Segmenten zweiter Art liegend aus einem einstückigen Blech gestanzt bzw. geformt.

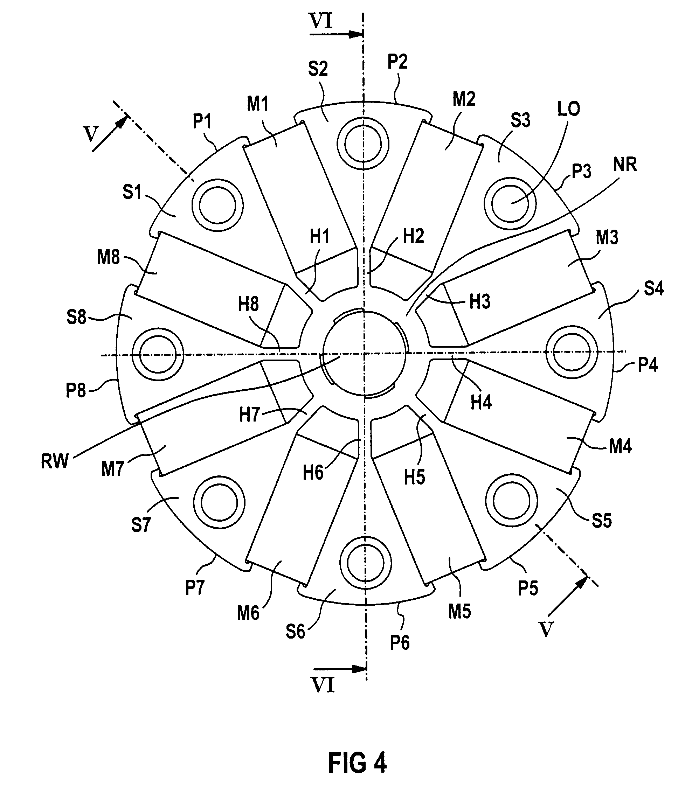

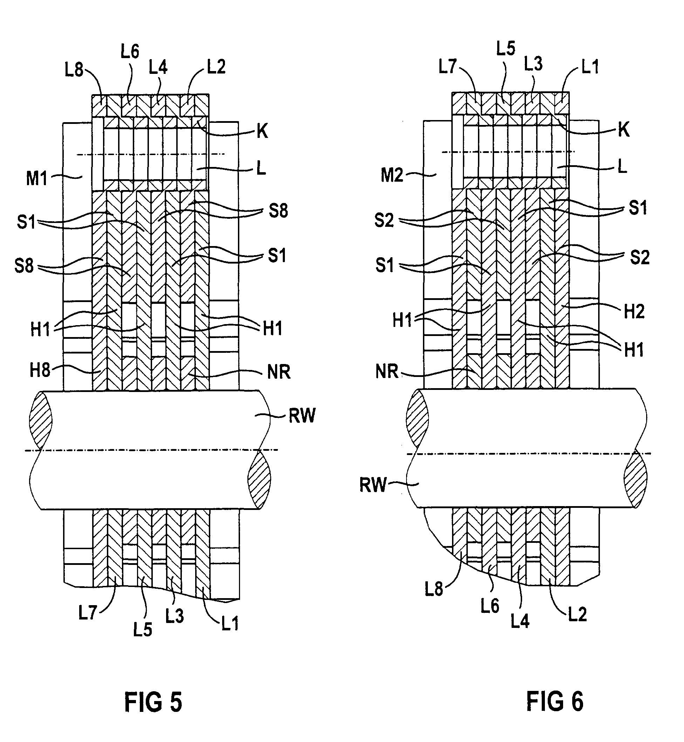

Als Schichtungshilfe und/oder zur Vereinfachung der Paketierungsfixierung der axial endseitigen Lamellen-Segmente erster Art S2;S4;S6;S8 bei Herstellung des kompletten Rotorblechpaketes sind - wie aus der stirnseitigen Draufsicht auf das Rotorblechpaket gemäß FIG 4 und die axialen Schnittbilder gemäß FIG 5,6 ersichtlich - zumindest in jeder axial endseitigen Lamellen-Ebene auch die Lamellen-Segmente erster Art in Abweichung vom Grundlösungsgedanken vorliegender Erfindung jeweils über einen angeformten Haltesteg H2;H4;H6;H8 an die Rotorwelle angebunden.

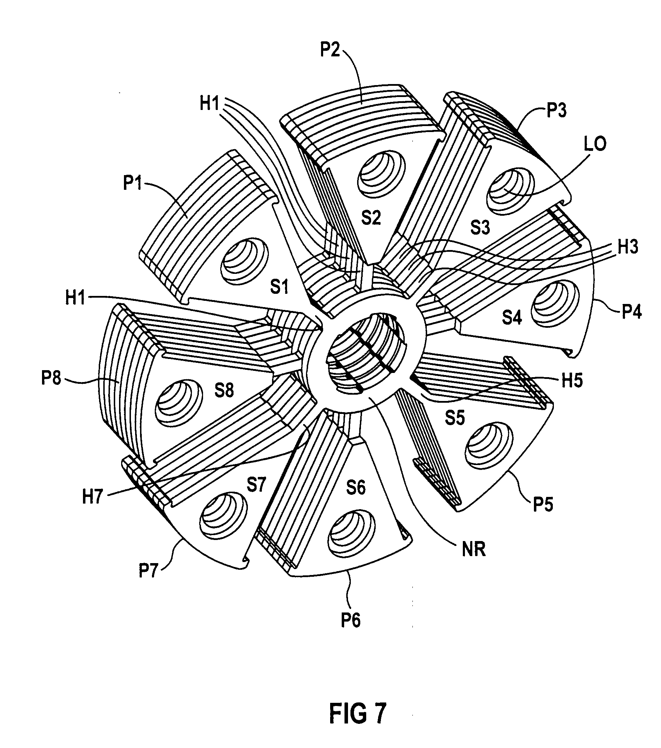

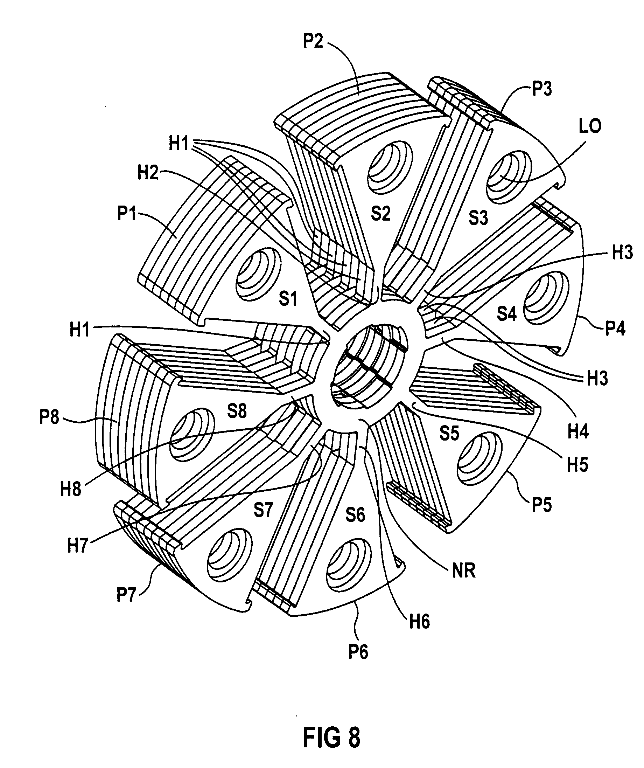

Das Erfindungswesentliche in Form der vorteilhaften Ausbildung und Schichtung mit gegenseitiger Fixierung und Ausrichtung der Lamellen-Segmente erster Art und zweiter Art zur Rotorwelle ist in FIG 7 für eine Anordnung gemäß FIG 1-3 und in FIG 8 für eine Anordnung gemäß FIG 4-6 jeweils nochmals anhand eines geschichteten kompletten Rotorblechpaketes in perspektivischer Darstellung erläutert, wobei zur besseren Deutlichkeit die vom Rotorblechpaket aufzunehmenden Magnete weggelassen sind; in Worten lässt sich die Erfindung wie folgt zusammenfassen:

Bei einer bürstenlosen Synchronmaschine mit Erregung durch rotorseitige Magnete (M1-M8), die zwischen aus Lamellen-Segmenten (S1-S8) geschichteten, durch radiale Haltestege (H1-H8) gegenüber der Rotorwelle (RW) fixierbaren Polzähnen (P1-P8) speichenartig verteilt sind, ist zur Minderung eines Leckflusses über die Haltestege bei gleichzeitig hoher mechanischer Festigkeit vorgesehen, nur jedes zweite Lamellen-Segment (S1;S3;S5;S7) über einen Haltesteg (H1;H3;H5;H7) an die Rotorwelle (RW) anzubinden und die übrigen Lamellen-Segmente (S2;S4;S6;S8) derart mit Versatz zu schichten, dass sie axial stirnseitig an die Lamellen-Segmente mit Haltestegen, vorzugsweise durch eine Stanzpaketier-Verknüpfung, anbindbar sind.

## Patentansprüche

1. Elektrische Maschine, insbesondere bürstenlose Synchronmaschine,
- mit einem, durch speichenartig um seine Rotorwelle (RW) verteilte Magnete (M1-M8), dauermagneterregten Rotor;
- mit tangential zwischen den Magneten (M1-M8) angeordneten, aus axial geschichteten Lamellen-Segmenten (S1-S8) bestehenden Polzähnen (P1-P8) ;
- von denen ein Teil als Lamellen-Segmente erster Art (S2;S4;S6;S8) sich im wesentlichen nur jeweils über die Flächenkontur eines Polzahns erstreckt und
- von denen der andere Teil als Lamellen-Segmente zweiter Art (S1;S3;S5;S7) jeweils zusätzlich über einen an die radial innere Wurzel eines Polzahns anschließenden Haltesteg (H1;H3;H5;H7) an der Rotorwelle (RW) fixierbar ist;
- mit einem derartigen tangentialen Versatz der Lamellen-Segmente erster Art gegenüber den Lamellen-Segmenten zweiter Art, dass die Lamellen-Segmente erster Art über jeweils axial vor- bzw. hintergeschichtete Lamellen-Segmente zweiter Art im Sinne eines in sich formstabilen Rotorblechpaket-Verbandes relativ zu der Rotorwelle (RW) mitfixierbar sind.

2. Elektrische Maschine nach Anspruch 1
- mit einer derartigen axialen Polzahn-Schichtung der Lamellen-Segmente, dass jeweils zur gegenseitigen Fixierungsanbindung ein Lamellen-Segment erster Art (S2;S4;S6;S8) in der einen Lamellen-Ebene axial fluchtend vor bzw. hinter einem Lamellen-Segment zweiter Art (S1;S3;S5;S7) der benachbarten Lamellen-Ebene angeordnet ist.

3. Elektrische Maschine nach Anspruch 1 und/oder 2
- mit einer jeweils axial stirnseitigen Anbindung zwischen den Lamellen-Segmenten erster Art (S2;S4;S6;S8) und den Lamellen-Segmenten zweiter Art (S1;S3;S5;S7) durch eine Stanzpaketier-Verknüpfung.

4. Elektrische Maschine nach zumindest einem der vorhergehenden Ansprüche
- mit einer in Umfangsrichtung je Lamellenebene abwechselnden Anordnung zwischen den Lamellen-Segmenten erster Art (S2;S4;S6;S8) einerseits und den Lamellen-Segmenten zweiter Art (S1;S3;S5/S7) andererseits.

5. Elektrische Maschine nach zumindest einem der vorhergehenden Ansprüche
- mit einer Anformung von Haltestegen (H2;H4;H6;H8) auch an die Lamellen-Segmente erster Art (S2;S4;S6;S8) im Bereich einer oder weniger axial endseitiger Lamellen-Ebenen im Sinne einer Schichtungs- und/oder Paketierungshilfe für die übrigen Lamellen-Segmente ohne Haltesteg-Anbindung an die Rotorwelle (RW).

6. Elektrische Maschine nach zumindest einem der vorhergehenden Ansprüche
- mit einer Zusammenfassung zumindest der Lamellen-Segmente zweiter Art (S1;S3;S5;S7) und derer Haltestege (H1;H3;H5;H7) sowie gegebenenfalls des Nabenrings (NR) sowie gegebenenfalls von Paketier-Verknüpfungsanformungen (V) jeweils einer Lamellenebene zu einem einstückigen Stanzteil bzw. Stanzbiegeteil.

7. Elektrische Maschine nach zumindest einem der vorhergehenden Ansprüche
- mit einer jeweiligen Fixierung der Haltestege (H1-H8) an der Rotorwelle (RW) über einen Nabenring (NR).

8. Elektrische Maschine nach zumindest einem der vorhergehenden Ansprüche
- mit einer derartigen Polzahn-Schichtung der Lamellen-Segmente (S1-S8), dass sowohl in tangentialer Lamellenebene-Richtung als auch in axialer Polzahn-Richtung jeweils ein Lamellen-Segment erster Art (S2;S4;S6;S8) mit einem Lamellen-Segment zweiter Art (S1;S3;S5;S7) abwechselt.
